# EUROPEAN PATENT SPECIFICATION

(11) **EP 3 493 181 B1**
(45) Date of publication and mention of the grant of the patent: **15.04.2020**
(21) Application number: 17204587.4
(22) Date of filing: 30.11.2017
(51) Int. Cl.: G09B 9/02, G09B 9/12

(54) **SIMULATION UNIT FOR SIMULATING A VEHICLE'S MOVEMENT**
SIMULATIONSEINHEIT ZUR SIMULATION EINER FAHRZEUGBEWEGUNG
UNITÉ DE SIMULATION PERMETTANT DE SIMULER LE MOUVEMENT D'UN VÉHICULE

(43) Date of publication of application: 05.06.2019
(73) Proprietor: Robert Bosch GmbH, 70442 Stuttgart (DE)
(72) Inventor: Selten, Will, 5469 EN Erp (NL)
(74) Representative: Thürer, Andreas

(56) References cited:
- WO-A1-2017/037458
- JP-A- 2006 259 363
- US-A1- 2005 042 578

## Description

The invention is related to a simulation unit for simulating a vehicle's movement.

Large motion systems - for instance a simulation unit for simulating a car's driving movement - conventionally consist of a support device formed by a large X-track which may extend up to thirty meters or more, on top of that a Y-track which may extend up to 20 meters or more. On top of this support device a motion system with (hexa) six degrees of freedom (6 DOF) and/or with motions, like vibration, yaw motion, tilting motion or the like, which can usually carry up to 4 tons - for instance a car - is arranged two-dimensionally movable. A payload, for example the car, is positioned in a dome stacked on top of that motion system. A conventional simulation unit of that kind is briefly described in the applicant's press information PI 093/12, December 12, 2012
As specifications for speed and acceleration in all directions are increasing, specifications for noise level however are decreasing. Conventional support devices for X- and Y-movements currently consist of rails and rail runners or rails and steel wheels. Specifications for stiffness and accuracy make structures needed for X- and Y-support heavy and costly. High masses and high accelerations implicate high power consumption and therefore large installed power units.

Document WO 2017/037458 A1 discloses a road vehicle simulator with a planar bed.

Document US 2005/0042578 A1 discloses a driving simulator with a planar bed, whereby the friction between a base unit and a base surface is reduced by air technology. Alternatively, the base unit can be mounted with respect to the base surface by means of sliding bearings or by means of roller bearings.

Some X-Y motion systems are using air bearings on granite structures or guidings to combine a high stiffness with a low friction. These systems are very expensive and cannot be upgraded to large two dimensional systems.

The invention is based on the problem to create a simulation unit for simulating a vehicle's movement with a less costly support device.
This problem is solved by a simulation unit with features of claim 1.

Further advantageous embodiments of the invention are described in the subclaims.

A simulation unit according to the invention serves to simulate a vehicle's, in particular any vehicle's, movement. The simulation unit preferably is made to simulate a "real-life vehicle's" movement. In particular the vehicle simulated is utilized to transport goods and / or one or more persons. The vehicle may be earthbound, airbound or seabound, such as a car, a plane or a ship. The unit comprises a carriage to carry a load, such as the vehicle or the vehicle's user-cabin. In addition the carriage may carry a visualization unit, such as a dome covering the vehicle, with an inner visualisation surface to visualize a realistic environment meanwhile a simulation process. Further the unit comprises a support device made of a support surface whereupon the carriage is movable two-dimensionally. According to the invention the carriage is directly arranged on the support surface in a sliding manner.

In other words the direct and slideable arrangement is designed in such a way that it does not require a lubricant separately provided by separate technical means, such as an aircushion. Due to that the simulation unit can be produced, mounted and maintained with lower costs.

To enable the carriage to slide smoothly on the support surface the carriage has at least one sliding surface, in particular a sliding pad.

According to a first alternative of the invention, the support surface is formed by a layer of ice, preferred a layer of a thickness of about 2.5 cm, in particular 3.5 cm. The ice layer can be thicker or thinner, in particular depending on the weight of the carriage.

According to a second alternative of the invention, the support surface is formed by a layer of fluoroplastics.

In a preferred embodiment the sliding surface and the support surface form a tribologically favourable pairing or a low friction pairing. By this the power consumption to move the carriage and the noise can be reduced.

In a preferred embodiment the ice of the support surface has a melting curve with a negative slope. Ice has the lowest possible static and dynamic friction coefficient in nature with respect to other relevant materials like steel or plastics. When for example steel is sliding over it, hardly any noise or vibrations will be generated.

In a preferred embodiment the support surface covers a complete moving area of the carriage, especially a horizontal and planar moving area, where the carriage is moved two-dimensionally upon.

In a preferred embodiment the moving area has a square shape or a circular shape, or the like. Any preferred shape is easy to realize as it is not necessary to adapt X-Y-rails to the shape.

In a preferred embodiment the carriage is movable on the support surface in two translational degrees of freedom, namely in X- and Y-direction parallel to an X- and Y-axis spanning a plane of the support surface.

In a possible embodiment the carriage additionally is movable on the support surface in one rotational degree of freedom, namely in a rotation around a Z-Axis which is normal to the X- and Y-Axis. Compared to simulation units based on conventional X-Y-rail support devices this widens a range of Z-rotation of the carriage.

In a preferred embodiment the mounted dome, vehicle and / or user-cabin is / are movable along three translational degrees of freedom and three rotational degrees of freedom within the carriage, in particular by means of a motion system. In this embodiment the above mentioned Z-rotation of the carriage is not provided. By strictly assigning the Z-rotation to the motion system only the simulation can be controlled more simple and / or stable.

To avoid static friction between the at least one sliding surface and the support surface, in a preferred embodiment the at least one sliding surface is driven relative to the rest of the carriage. In this way the at least one sliding surface has a determined movement with respect to the support surface, in particular the ice, even in case the carriage is standing still.

Such a driven sliding surface may result in forces and / or accelerations acting on the carriage, thus effecting the simulation in an undesirable manner. To avoid such influences in a preferred embodiment a multitude of sliding surfaces is provided, each having at least two sections being rotatable or rotating in opposite directions. In such a way said forces and accelerations are compensated.

To avoid changes in roughness of the support surface due to moisture freezing to the ice a polishing (mopping) process is preferred. Thus, changes of the friction coefficient and / or of a flatness of the support surface can be avoided.

This polishing process (mopping) can be realized by rotateably driven sliding surfaces or rotateably driven sections of the sliding surfaces. They can be driven constantly even if the carriage and / or motion system (6 DOF system), including a pay load, is standing still.

In particular to cover cases the simulation unit is not in use (e.g. during the night) in a preferred embodiment a control unit of the simulation unit is provided and programmed in such a way that the drive unit is moving the carriage along a "polishing path" on the support surface, in particular covering the whole moving area.

To keep moisture within specification and to reduce an amount of moisture freezing to the ice a building of the simulation unit in which the support surface is located is air-conditioned.

In a preferred embodiment the carriage has at least three attachment points or attachment sections. Each of these points or sections is connected to a drive unit of the simulation unit arranged, in particular circumferentially arranged, around the carriage. The connection is realized by a position proof means, for example a rope, a steel wire rope or a belt shaped tension device. The term "position proof means" stands for a low elasticity of said means.

By controlling the position of each rope the movement of the carriage in X- and Y-direction is controlled, in particular under the specification of avoiding the rotation around Z.

In a preferred embodiment the attachment points or sections are arranged circumferentially around a centre of gravity of the carriage. Thus, the forces applied to the carriage by the ropes result in not more than minimal tilting torques around the X- and Y-Axis.
To assure this, in a preferred embodiment the attachment points or sections are located between a highest and a lowest centre of gravity of the carriage in relation to the support surface. In particular the attachment points or sections span an attachment plane in which an average centre of gravity of the carriage is arranged. An average centre of gravity is calculable depending on different vehicle's or user-cabins designated to be mounted on the carriage.

To realize an individual location of the attachment points or sections in a plane of the individual centre of gravity of an individual vehicle or user-cabin, in a preferred embodiment the attachment points or sections are adjustable, at least in the Z-direction.

In a preferred embodiment the attachment points or sections are located on a frame or housing device of the carriage.

In a preferred embodiment the frame device has an annular frame part carrying the attachment points or sections.

In a preferred embodiment the drive unit for each attachment point has a winch with a supple pulling means that is attached to said attachment point. It is preferred that the pulling means is static, thus having a low elasticity. The lower the elasticity of the pulling means the more direct and dynamic the movement of the carriage can be controlled. A preferred pulling means is a Dyneema- or Kevlar- or Araldit-rope or belt shape as it combines high tensile strength with low elasticity and weight. As a result a direct and dynamic control of the movement of the carriage is achieveable. Generally said a supple pulling means made of Ultra-High Molecular Weight Polyethylene (UHMWPE) is preferred.

In case textile or fiber ropes are used as supple pulling means there is a possibility to include an electric power supply in a core of the rope. The power supply may have at least 4 phases for a TN-C power supply system in particular.

For that purpose in a preferred embodiment in the centre of the Ultra-High Molecular Weight Polyethylene rope a power cable is integrated in order to transport power to the-carriage and its components, such as the motion system and its actuators.

In a preferred embodiment each winch is driven by a hydraulic actuator, in particular by a hydraulic motor. In an alternative embodiment it is driven by an electric actuator, in particular an electric motor.

With respect to the specification to avoid tilting torques around the X- and Y-Axis at the carriage, in a preferred embodiment the winches are arranged circumferentially or in a rectangular or triangular shape around the centre of gravity of the carriage.

To assure this, in a preferred embodiment rope exit points at each winch - where the ropes exit the winches towards the attachment points - are located in Z-direction between the highest possible and the lowest possible centre of gravity of the carriage in relation to the support surface. In particular the attachment points or sections, the rope exit points and the average centre of gravity of the carriage span a plane.

To realize an individual location of the rope exit points in a plane of the individual centre of gravity of an individual vehicle or user-cabin, in a preferred embodiment the rope exit points are adjustable, at least in the Z-direction.

In a preferred embodiment this is achieved by supporting the winches adjustable, at least vertically, in particular in Z-direction.

To minimize shearing force in a preferred embodiment the winches are / can be swivel-mounted with respect to a vertical axis, in particular parallel to the Z-axis.

In a preferred embodiment the carriage has one sliding surface or sliding pad for each attachment point or section being arranged inside a vertical projection area of the attachment point or section.

In a preferred embodiment the carriage includes a mounted vehicle or a mounted user-cabin of a vehicle.

In a preferred embodiment the vehicle or user-cabin is mounted on a motion system of the carriage, combined with other actuators for yaw movement or vibrations.

In a preferred embodiment the motion system comprises at least one actuator, preferably three pairs of actuators, in particular electrically driven actuators. In an alternative embodiment these actuators are hydraulic cylinders.

In a preferred embodiment these pairs, in particular the actuators' attachment points located proximal to the support surface, are based vertically above the sliding surface or each of the pairs is based vertically above one of at the least three sliding surfaces.

In a preferred embodiment each attachment point or section of the supple pulling means is spatially coupled to one of the sliding surfaces or paired rotatable sliding surfaces such that each couple is located at an individual circumferential angle, measured e.g. with respect to a Z-Axis passing the centre of gravity or a middle point of the carriage.

In a preferred embodiment the simulation unit comprises a user-interface mounted in the vehicle or the user-cabin and a control unit to control the movement of the carriage depending on inputs entered at the user-interface.

For maintenance reasons the complete carriage can be lifted by a crane in order to have the sliding surfaces off the ice (or out of the water in case of melting).

Two embodiments of a simulation unit according to the invention are shown in the figures.
Figure 1 shows a first embodiment of a simulation unit according to the invention, in a top view,
Figure 2 shows a carriage of the first embodiment of the simulation unit, in a perspective view,
Figure 3 shows the carriage of the first embodiment of the simulation unit, sliding on a support surface of the simulation unit, in a side view,
Figure 4 shows a carriage of a second embodiment of a simulation unit according to the invention, in a view from below, and
Figure 5 shows a cross section of a power supply cable of all embodiments of the simulation unit.

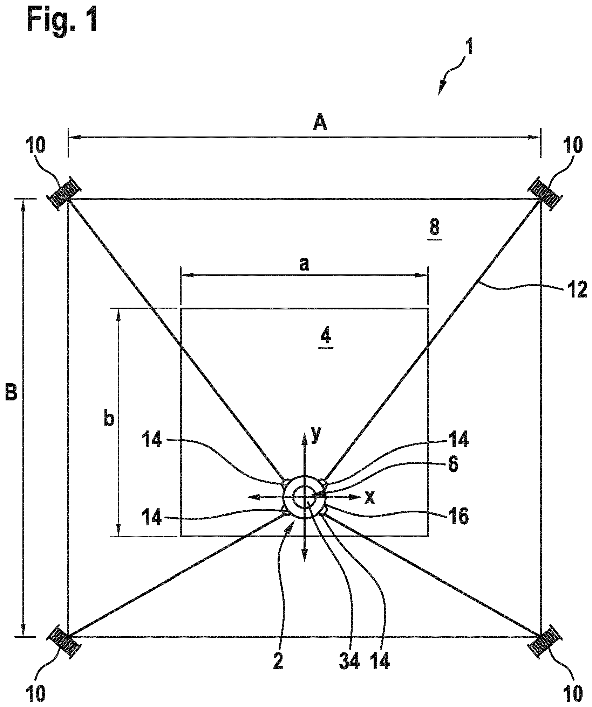

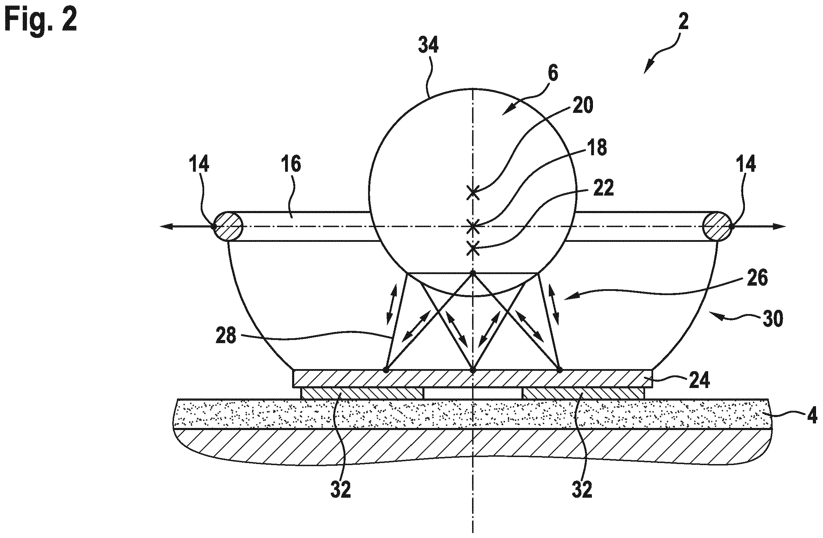

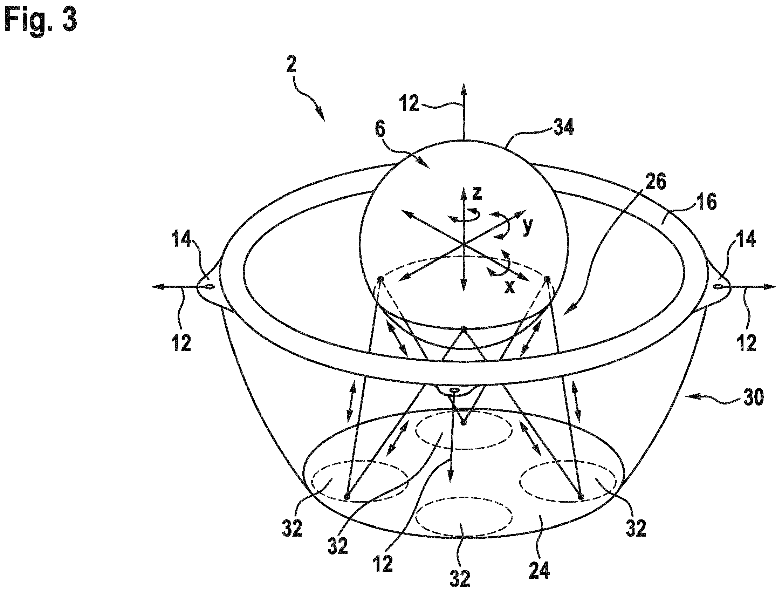

A simulation unit 1 according to figure 1 has a carriage 2 slideably arranged on a support device which is formed by a support surface 4. The support surface 4 is limiting a moving area which extends in a length 'a' and a width 'b'. Length and width are (but not limited to) 30 and 20 meters which is sufficient to simulate the movement of a street vehicle, in particular to simulate all occurring accelerations and decelerations. The carriage 2 includes a user cabin 6 which is mounted on the carriage 2 via a motion system (see figures 2, 3). The carriage 2 can be moved two-dimensionally on the support surface 4 along an X-axis and Y-axis.

The support surface 4 is made of a layer of ice which has a thickness (but is not limited to) of 2.5 cm in the embodiment.

The moving area of the support surface 4 is surrounded by a control area 8. Both areas 4, 8 have a square shape. The simulation unit is located in a building. At each corner of the control area 8 a winch 10 is located. Each winch 10 is connected to the carriage 2 via a supple pulling means 12 which in the present embodiment is a rope made of dyneema®. Compared to a steel rope the textile kind of a dyneema rope 12 combines a low weight and high tensile strength with easy handling and maintenance. In consequence the drive unit which is formed by the winches 10 and the pulling means 12 is of reduced weight. By means of the driving unit 10, 12 the carriage 2 with its user-cabin 6 can be slideably moved on the support surface 4 to simulate the driving movement of the vehicle.

According to the invention a conventional rail system which supporting the carriage 2 is replaced by a support surface 4 made of ice and having a low friction factor. Thus, the simulation unit 1 has the advantage that the carriage 2 can be moved very easily by the drive unit 10, 12 and has very low noise occurrence. Due to the low friction factor, the speed and acceleration of the carriage 2 on the support surface 4 is high and the consumption of power for the drive unit 10, 12 and the power to be installed is reduced. Compared to conventional rail and steel wheel systems specifications for stiffness and accuracies as well as accelerations are easily to meet.

According to the embodiment of figure 1 the drive unit 10, 12 has four winches 10. The minimum number of winches 10 is three. Higher numbers of winches 10 are possible, for example 5, 6, 7 or more.

The carriage 2 has four attachment points 14, each linked to one of the dyneema- or Kevlar- or Araldit-ropes 12, or the like. The attachment points 14 are circumferentially distributed around the user-cabin 6 and located at an annular frame part 16 of the carriage 2.

According to figure 2 the carriage 2 is located on the support surface 4. A user-cabin 6 of a vehicle is located inside a dome 34. The latter comprises visualization displays on its inner surface to display a simulated environment to the user in accordance with the simulation movements.

The carriage 2 has a highest centre of gravity 20, a lowest centre of gravity 22 and an average centre of gravity 18. The location of the centre of gravity generally depends on the individual type of vehicle or user-cabin 6 of a vehicle mounted to the carriage 2. Depending on the vehicle or the user-cabin 6, at least the Z-coordinate of the individual centre of gravity may vary. The first one 20 is the highest possible centre of gravity of the carriage 2 depending on the user-cabin 6 or vehicle mounted. The last one 22 is the lowest possible centre of gravity of the user-cabin 6 or vehicle mounted. The average centre of gravity 18 is a centre of gravity of the carriage 2 which is averaged over all user-cabins 6 or vehicles designated to be mounted.

To minimize tilting torques effecting the carriage 2 and to minimize friction of the carriage 2 on the support surface 4 the attachment points 14 are located in a plane which passes through the average centre of gravity 18.

According to figure 2 the carriage 2 has a base plate 24 on which is mounted a motion system 26, which provides a structure for bearing, moving and transferring a load. The load is a user-cabin 6, mock-up like a body of vehicle, projectors, electric actuators 28 for moving the platform relative to the base plate 24, preferably in six degree of freedom (DOF), displayed only schematically in figure 2 and 3. Different from the disclosed embodiments a motion system according to the invention may move the load in less than six DOFs.

Said translational and rotational movements are represented by an axis system displayed in figure 3. Thus, the user-cabin 6 can be moved by the motion system 26 in at least 1 DOF, preferably the motion system is a hexapod 26 in six DOF, independently from the two possible movements caused by the drive unit 10, 12 and displayed in figure 1.
Inside the user-cabin 6 a user interface is located to enter input commands like acceleration, direction or deceleration. The user interface normally is the one of the vehicle to be simulated. It can be one of an earthbound, airbound or seabound vehicle, like a car, a plane or a ship or a boat.

The frame part 16 is connected to the base plate 24 via a framework construction 30 which in figures 2, 3 is just displayed schematically. On a lower side of the base plate 24 four sliding surfaces or sliding pads 32 are circumferentially installed. They consist of fluoroplastics which makes the tribological pair of the support surface 4 and the sliding pads 32 favourable, having a very low friction factor. Thus, to move the carriage 2 meanwhile the simulation the energy consumption of the drive unit 10, 12 is very low.

The electric actuators 28 can be of the type translational as well as rotational (crank mechanism).

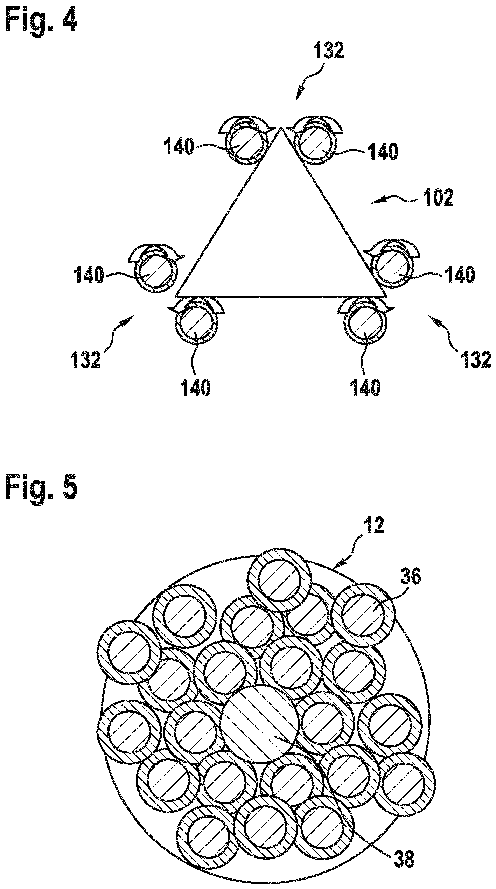

Figure 4 shows a second embodiment of a carriage 102 in a view from below. Different from the first embodiment the carriage 102 has only three sliding surfaces 132, wherein each sliding surface 132 constitutes of two independent surface sections 140. Each surface section 140 is rotateably driven. By means of rotation of the surface sections 140 a permanent polishing of the ice surface 4 is achieved. By controlling the rotation direction of the surface sections 140 of each sliding surface 132 individually, which means the surface sections 140 have opposite rotation directions, the carriage 102 is kept in position.

A polishing or mopping process is executed to avoid changes in roughness of the support surface 4 caused by moisture freezing to the ice and changing the friction coefficient and / or the flatness of the floor. To keep the moisture within specifications and / or to reduce moisture the building of the simulation unit can be air-conditioned.

The polishing process can be constantly applied even if the carriage 102 is standing still. In case the simulation unit is not in use, e. g. during the night, a control unit of the simulation unit is programmed in such a way, that the carriage 102 - including the rotating surface sections 140 - is driven by the drive unit 10, 12 across the whole moving area 4 (see figure 1) along a predetermined polishing path.

Figure 5 shows a rope 12 according to figures 1 to 3. It is the one dyneema rope 12 according to figure 1 extending from the winch 10 in the upper right corner of the control area 8 of the simulation unit 1. The fibre rope 12 has a multitude of strands 36, each strand 36 consisting of a multitude of threads. The use of a fibre rope 12 makes it possible to include an electric power supply in a core of the fibre rope 12. According to figure 5 in the centre of the rope 12 there is a power supply cable 38 provided. It has at least four phases for a TN-C-power supply system. By the power supply cable 38 the electric actuators 28 and all electric equipment provided in the carriage 2; 102 are supplied with electric energy.

The user-cabin 6 or vehicle mounted may have a payload of up to four metric tons, or more.

As an alternative to fluoroplastics the sliding pads 32; 132 can be made of steel or any other solid material (like wood).

A simulation unit to simulate a vehicle's movement, comprising a surface shaped support device and a carriage being two-dimensionally movable thereon is laid open.

### List of reference numbers:

- 1: simulation unit
- 2; 102: carriage
- 4: support surface
- 6: user-cabin of vehicle
- 8: control area
- 10: winch
- 12: dyneema rope
- 14: attachment point
- 16: frame part
- 18: average centre of gravity
- 20: highest centre of gravity
- 22: lowest centre of gravity
- 24: base plate
- 26: motion system
- 28: electric actuator
- 30: frame construction
- 32; 132: sliding surface
- 34: dome
- 36: strand
- 38: power supply cable
- 140: surface section

## Claims

1. Simulation unit to simulate a vehicle's (6) movement, comprising a support surface (4) and a carriage (2; 102) being two-dimensionally movable on the support surface (4), wherein the carriage (2; 102) is directly arranged on the support surface (4) in a sliding manner, **characterized in that** the support surface (4) is formed by ice or fluoroplastics.

2. Simulation unit according to claim 1, wherein the carriage (2; 102) has at least one sliding surface (32; 132) directly arranged on the support surface (4) in a sliding manner.

3. Simulation unit according to claim 2, wherein the at least one sliding surface (132) is disposed movable, in particular rotatable and / or vibrateable, at the carriage (102).

4. Simulation unit according to any of the preceding claims, wherein the carriage (2) has at least three attachment points (14), each being position-proof connected with a drive unit (10, 12) arranged around, in particular arranged circumferentially around, the carriage (2).

5. Simulation unit according to claim 4, wherein the attachment points (14) are arranged around, in particular arranged circumferentially around, a centre of gravity (18, 20, 22) of the carriage (2).

6. Simulation unit according to claim 4 or 5, wherein, in relation to the support surface (4), the attachment points (14) are located between a highest (20) and a lowest (22) centre of gravity of the carriage (2).

7. Simulation unit according to one of the claims 4 to 6, wherein the attachment points (14) span an attachment plane in which an average centre of gravity (18) of the carriage (2) is arranged.

8. Simulation unit according to one of the claims 4 to 7, wherein the attachment points (14) are located on a frame device (30) of the carriage (2).

9. Simulation unit according to claim 8, wherein the frame device (30) has an annular frame part (16) carrying the attachment points (14).

10. Simulation unit according to one of the claims 4 to 9, wherein the drive unit (10, 12) for each attachment point (14) has a winch (10) with a supple pulling means (12) that is attached to said attachment point (14).

11. Simulation unit according to claim 10, wherein an electric cable (38) to supply the carriage (2) with electric power is routed in the supple pulling means (12) or parallel to the supple pulling means.

12. Simulation unit according to any of the preceding claims, wherein the carriage (2) includes a mounted vehicle or a mounted user-cabin (6) of a vehicle.

13. Simulation unit according to claim 12, wherein the vehicle or user-cabin (6) is mounted on a motion system (26) of the carriage (2).

14. Simulation unit according to claim 13, wherein the motion system (26) comprises three pairs of electric actuators (28).

15. Simulation unit at least according to claim 2 and 14, wherein the pairs are based vertically above the sliding surface, or wherein each of the pairs is based vertically above one of at least three sliding surfaces (32).

16. Simulation unit at least according to claim 2 and 4, wherein each attachment point (14) is spatially coupled to one of the sliding surfaces (32) such that each of these couples is located at an individual circumferential angle.

17. Simulation unit according to any of the preceding claims, comprising a user-interface and a control unit to control the movement of the carriage (2; 102) depending on inputs entered at the user-interface.

## Patentansprüche

1. Simulationseinheit zur Simulation einer Bewegung eines Fahrzeugs (6), aufweisend eine Stützfläche (4) und einen Schlitten (2; 102), welcher auf der Stützfläche (4) zweidimensional bewegbar ist, wobei der Schlitten (2; 102) direkt auf der Stützfläche (4) in einer gleitenden Weise eingerichtet ist, **dadurch gekennzeichnet, dass** die Stützfläche (4) durch Eis oder Fluorkunststoffe ausgebildet ist.

2. Simulationseinheit nach Anspruch 1, wobei der Schlitten (2; 102) mindestens eine Gleitfläche (32; 132) aufweist, welche direkt auf der Stützfläche (4) in einer gleitenden Weise eingerichtet ist.

3. Simulationseinheit nach Anspruch 2, wobei die mindestens eine Gleitfläche (132) beweglich, insbesondere drehbar und / oder vibrierbar, an dem Schlitten (102) angeordnet ist.

4. Simulationseinheit nach einem der vorhergehenden Ansprüche, wobei der Schlitten (2) mindestens drei Befestigungspunkte (14) aufweist, welche jeweils positionssicher mit einer Antriebseinheit (10, 12) verbunden ist, welche um den Schlitten (2), insbesondere in Umfangsrichtung um den Schlitten (2), herum eingerichtet sind.

5. Simulationseinheit nach Anspruch 4, wobei die Befestigungspunkte (14) um einen Schwerpunkt (18, 20, 22), insbesondere in Umfangsrichtung um einen Schwerpunkt (18, 20, 22), des Schlittens (2) herum angeordnet sind.

6. Simulationseinheit nach Anspruch 4 oder 5, wobei sich die Befestigungspunkte (14) in Bezug auf die Stützfläche (4) zwischen einem höchsten (20) und einem niedrigsten (22) Schwerpunkt des Schlittens (2) befinden.

7. Simulationseinheit nach einem der Ansprüche 4 bis 6, wobei die Befestigungspunkte (14) eine Befestigungsebene aufspannen, in welcher ein durchschnittlicher Schwerpunkt (18) des Schlittens (2) angeordnet ist.

8. Simulationseinheit nach einem der Ansprüche 4 bis 7, wobei sich die Befestigungspunkte (14) auf einer Rahmenvorrichtung (30) des Schlittens (2) befinden.

9. Simulationseinheit nach Anspruch 8, wobei die Rahmenvorrichtung (30) ein ringförmiges Rahmenteil (16) aufweist, welches die Befestigungspunkte (14) trägt.

10. Simulationseinheit nach einem der Ansprüche 4 bis 9, wobei die Antriebseinheit (10, 12) für jeden Befestigungspunkt (14) eine Winde (10) mit einem biegsamen Zugmittel (12) aufweist, welches an dem Befestigungspunkt (14) befestigt ist.

11. Simulationseinheit nach Anspruch 10, wobei ein elektrisches Kabel (38), um den Schlitten (2) mit elektrischer Energie zu versorgen, in dem biegsamen Zugmittel (12) oder parallel zu dem biegsamen Zugmittel geführt ist.

12. Simulationseinheit nach einem der vorhergehenden Ansprüche, wobei der Schlitten (2) ein montiertes Fahrzeug oder eine montierte Fahrgastzelle (6) eines Fahrzeugs umfasst.

13. Simulationseinheit nach Anspruch 12, wobei das Fahrzeug oder die Fahrgastzelle (6) auf einem Bewegungssystem (26) des Schlittens (2) montiert ist.

14. Simulationseinheit nach Anspruch 13, wobei das Bewegungssystem (26) drei Paare von elektrischen Aktuatoren (28) aufweist.

15. Simulationseinheit zumindest nach Anspruch 2 und 14, wobei die Paare senkrecht über der Gleitfläche stationiert sind, oder wobei jedes Paar senkrecht über einer von mindestens drei Gleitflächen (32) stationiert ist.

16. Simulationseinheit zumindest nach Anspruch 2 und 4, wobei jeder Befestigungspunkt (14) an eine der Gleitflächen (32) derartig räumlich gekoppelt ist, dass sich jedes dieser Koppelpaare an einem individuellen Umfangswinkel befindet.

17. Simulationseinheit nach einem der vorhergehenden Ansprüche, aufweisend eine Benutzeroberfläche und eine Steuereinheit, um die Bewegung des Schlittens (2; 102) in Abhängigkeit von an der Benutzeroberfläche eingegebenen Eingaben zu steuern.

## Revendications

1. Unité de simulation pour simuler le mouvement d'un véhicule (6), comprenant une surface de support (4) et un chariot (2 ; 102) mobile dans deux dimensions sur la surface de support (4), le chariot (2 ; 102) étant disposé directement sur la surface de support (4) de manière coulissante, **caractérisé en ce que** la surface de support (4) est formée par de la glace ou des plastiques fluorés.

2. Unité de simulation selon la revendication 1, le chariot (2 ; 102) ayant au moins une surface de glissement (32 ; 132) disposée directement sur la surface de support (4) de manière coulissante.

3. Unité de simulation selon la revendication 2, l'au moins une surface de glissement (132) étant disposée de manière mobile, en particulier rotative et/ou vibrante, sur le chariot (102).

4. Unité de simulation selon l'une quelconque des revendications précédentes, le chariot (2) ayant au moins trois points de fixation (14), chacun étant relié avec preuve de position à une unité d'entraînement (10,12) disposée autour, en particulier disposée circonférentiellement autour, du chariot (2).

5. Unité de simulation selon la revendication 4, les points de fixation (14) étant disposés autour, en particulier disposés circonférentiellement autour, d'un centre de gravité (18, 20, 22) du chariot (2).

6. Unité de simulation selon la revendication 4 ou 5, par rapport à la surface de support (4), les points de fixation (14) étant situés entre un centre de gravité le plus élevé (20) et le plus bas (22) du chariot (2).

7. Unité de simulation selon l'une des revendications 4 à 6, les points de fixation (14) couvrant un plan de fixation dans lequel se trouve un centre de gravité moyen (18) du chariot (2).

8. Unité de simulation selon l'une des revendications 4 à 7, les points de fixation (14) étant situés sur un dispositif cadre (30) du chariot (2).

9. Unité de simulation selon la revendication 8, le dispositif cadre (30) ayant une partie cadre annulaire (16) portant les points de fixation (14).

10. Unité de simulation selon l'une des revendications 4 à 9, l'unité d'entraînement (10, 12) pour chaque point de fixation (14) ayant un treuil (10) avec un moyen de traction souple (12) qui est fixé audit point de fixation (14).

11. Unité de simulation selon la revendication 10, un câble électrique (38) pour alimenter le chariot (2) en énergie électrique étant acheminé dans le moyen de traction souple (12) ou parallèlement au moyen de traction souple.

12. Unité de simulation selon l'une quelconque des revendications précédentes, le chariot (2) comprenant un véhicule monté ou une cabine d'utilisateur montée (6) d'un véhicule.

13. Unité de simulation selon la revendication 12, le véhicule ou la cabine d'utilisateur (6) étant monté sur un système de mouvement (26) du chariot (2).

14. Unité de simulation selon la revendication 13, le système de mouvement (26) comprenant trois paires d'actionneurs électriques (28).

15. Unité de simulation au moins selon les revendications 2 et 14, les paires étant basées verticalement au-dessus de la surface de glissement, ou chacune des paires étant basée verticalement au-dessus d'une surface parmi au moins trois surfaces de glissement (32).

16. Unité de simulation au moins selon les revendications 2 et 4, chaque point de fixation (14) étant accouplé spatialement à l'une des surfaces de glissement (32) de sorte que chacun de ces couples se trouve à un angle circonférentiel individuel.

17. Unité de simulation selon l'une quelconque des revendications précédentes, comprenant une interface utilisateur et une unité de commande pour commander le mouvement du chariot (2 ; 102) en fonction des entrées saisies au niveau de l'interface utilisateur.
